# EUROPEAN PATENT APPLICATION

(11) **EP 4 280 597 A2**
(43) Date of publication of application: **22.11.2023**
(21) Application number: 23171599.6
(22) Date of filing: 04.05.2023
(51) Int. Cl.: H04N 7/18, G06V 10/00

(54) **METHODS AND SYSTEMS FOR IMPROVING VIDEO ANALYTIC RESULTS**

(30) Priority: 17.05.2022 US 202217746648
(71) Applicant: Honeywell International Inc., Charlotte, NC 28202 (US)
(72) Inventor: CHAURASIA, Jitendra Sitaram, Charlotte, 28202 (US); BALASUBRAMANIAN, Mourian, Charlotte, 28202 (US); DIVAKARA, Manjunatha Tumkur, Charlotte, 28202 (US); ESWARA, Lalitha M., Charlotte, 28202 (US); MAITI, Ayan, Charlotte, 28202 (US); AHADH, Abdhul, Charlotte, 28202 (US)
(74) Representative: Haseltine Lake Kempner LLP

(57) **Abstract**

Improving performance of a video analytics algorithm includes obtaining desired video parameters for achieving a desired accuracy level, and identifying one or more of the video parameters of the video stream. One or more of the video parameters are compared with a corresponding one of the desired video parameters to ascertain whether one or more of the video parameters diverge from the corresponding one of the desired video parameters by at least a threshold amount. When one or more of the video parameters diverge from the corresponding one of the desired video parameters by at least the threshold amount, one or more of the video parameters are adjusted toward the corresponding one of the desired video parameters.

## Description

### Technical Field

The present disclosure pertains generally to video analytics and more particularly to methods and systems for improving video analytic results.

### Background

A security system may include a number of video cameras within a monitored area. The monitored area may be indoors or outdoors, for example. Each of the video cameras has a field of view (FOV) and is configured to capture a video stream of that video camera's FOV. A variety of video analytics algorithms are known for analyzing video streams and identifying objects or events of interest in the video streams. The video analytics algorithms, or at least some of them, may perform better under certain operating conditions. What would be desirable are methods and systems for improving video analytic results by aligning the video analytics algorithms with current operating conditions.

### Summary

This disclosure relates generally to methods and systems for improving video analytic results by aligning video analytics algorithms with current operating conditions. An example may be found in a method of improving performance of a video analytics algorithm, the video analytics algorithm configured to receive and analyze a video stream captured by a video camera, wherein the video stream has one or more video parameters. The illustrative method includes storing a set of desired video parameters for achieving a desired accuracy level for the video analytics algorithm, and identifying one or more of the video parameters of the video stream. One or more of the video parameters of the video stream are then compared with a corresponding one of the desired video parameters of the set of desired video parameters to ascertain whether one or more of the video parameters of the video stream diverge from the corresponding one of the desired video parameters of the set of desired video parameters by at least a threshold amount. When one or more of the video parameters of the video stream diverge from the corresponding one of the desired video parameters of the set of desired video parameters by at least the threshold amount, one or more of the video parameters of the video stream are adjusted toward the corresponding one of the desired video parameters of the set of desired video parameters to increase the accuracy level of the video analytics algorithm.

Another example may be found in a system for improving video analytics of a video stream captured by a video camera. The illustrative system includes a memory for storing a plurality of video analytics algorithms, each configured to identify a common (e.g. the same) event type in the video stream, and one or more processors that are operatively coupled to the memory. The one or more processors are configured to identify one or more video parameters of the video stream, and based on the one or more identified video parameters of the video stream, select a selected one of the plurality of video analytics algorithms that is best suited to identify the common event type in the video stream. The one or more processors are configured to process the video stream using the selected one of the plurality of video analytics algorithms to identify the common event type in the video stream.

Another example may be found in a method of improving video analytics of a video stream captured by a video camera. The illustrative method includes storing a plurality of video analytics algorithms, each configured to identify a common event type in the video stream, and analyzing the video stream to identify one or more objects in the video stream. Based on the one or more objects identified in the video stream, a selected one of the plurality of video analytics algorithms that is best suited to identify the common event type in the video stream is selected. The video stream is processed using the selected one of the plurality of video analytics algorithms to identify the common event type in the video stream.

The preceding summary is provided to facilitate an understanding of some of the features of the present disclosure and is not intended to be a full description. A full appreciation of the disclosure can be gained by taking the entire specification, claims, drawings, and abstract as a whole.

### Brief Description of the Drawings

The disclosure may be more completely understood in consideration of the following description of various illustrative embodiments of the disclosure in connection with the accompanying drawings, in which:
Figure 1 is a schematic block diagram of an illustrative security system;
Figure 2 is a schematic block diagram of an illustrative system for improving video analytics of a video stream;
Figure 3 is a flow diagram showing an illustrative method of improving performance of a video analytics algorithm;
Figure 4 is a flow diagram showing an illustrative method of improving performance of a video analytics algorithm;
Figure 5 is a flow diagram showing an illustrative method of improving video analytics of a video stream;
Figure 6 is a flow diagram showing an illustrative method of improving video analytics of a video stream;
Figure 7 is a flow diagram showing an illustrative method;
Figure 8A is a flow diagram showing an illustrative method;
Figure 8B is a flow diagram showing an illustrative method;
Figure 9 is a flow diagram showing an illustrative method;
Figure 10 is a flow diagram showing an illustrative method;
Figure 11 is a flow diagram showing an illustrative method;
Figure 12 is a flow diagram showing an illustrative method; and
Figures 13 through 15 are schematic images of relative camera placements.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

### Description

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

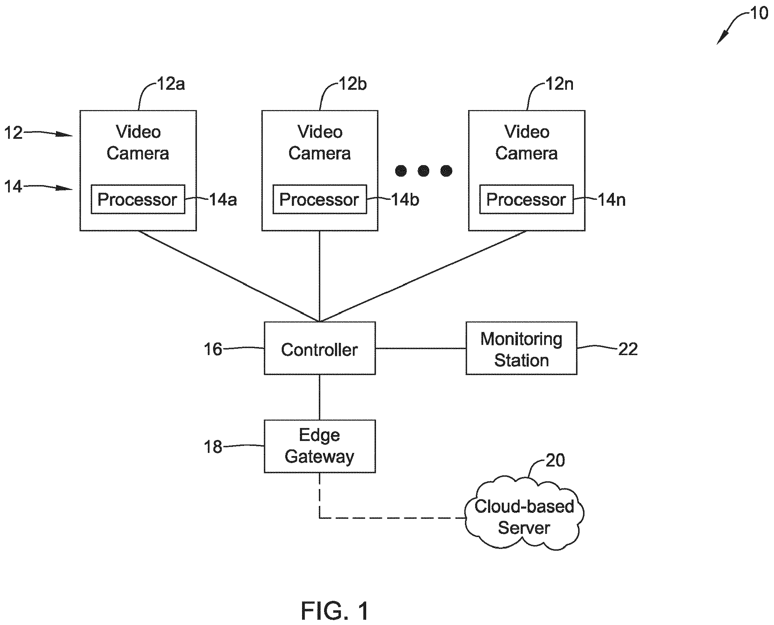

Figure 1 is a schematic block diagram of an illustrative security system 10 that includes a plurality of video cameras 12. The video cameras 12 are individually labeled as 12a, 12b, and through 12n. The security system 10 may include any number of video cameras 12, for example. In some cases, as shown, each of the video cameras 12 may include a processor 14, individually labeled as 14a, 14b and through 14n. In some cases, one or more of the video cameras 12 may have two or more processors 14. In some cases, one or more of the video cameras 12 may not include a processor 14. For video cameras 12 that include at least one processor 14, the at least one processor 14 may perform at least some video analytics on video streams being produced by the video camera 12, but this is not required.

In the example shown, each of the video cameras 12 is operably coupled with a controller 16. The video cameras 12 may communicate with the controller 16 via any wired or wireless protocol. The controller 16 may, for example, control operation of at least some of the video cameras 12. The controller 16 may receive video streams from one or more of the video cameras 12. In some instances, the controller 16 may be configured to perform video analytics on one or more video streams being provided to the controller 16 by one or more of the video cameras 12.

In some cases, the controller 16 may be operably coupled with an edge gateway 18, such as via a facility network (not expressly shown). The edge gateway 18 may be configured to communicate with a cloud-based server 20. The cloud-based server 20 may function to monitor performance of the security system 10, for example. In some instances, at least some video analytics algorithms may be executed by the cloud-based server 20, particularly in cases where particular video analytics algorithms may require more processing power than may be available within the processors 14, the controller 16 and/or the edge gateway 18.

In some cases, the security system 10 may include a monitoring station 22. The monitoring station 22 may be operably coupled with the controller 16, and/or indirectly coupled with the cloud-based server 20 via the edge gateway 18. The monitoring station 22 may allow security personnel to monitor and/or review video streams from one or more of the video cameras 12, or perhaps to review video clips that show events of possible interest, where the video clips are portions of video streams, and may be provided by one or more of the video cameras 12, for example. The monitoring station 22 may permit security personnel to raise alarms and alerts, and possibly notify authorities such as but not limited to police and fire, depending on what is detected and seen within the video clips and/or video streams.

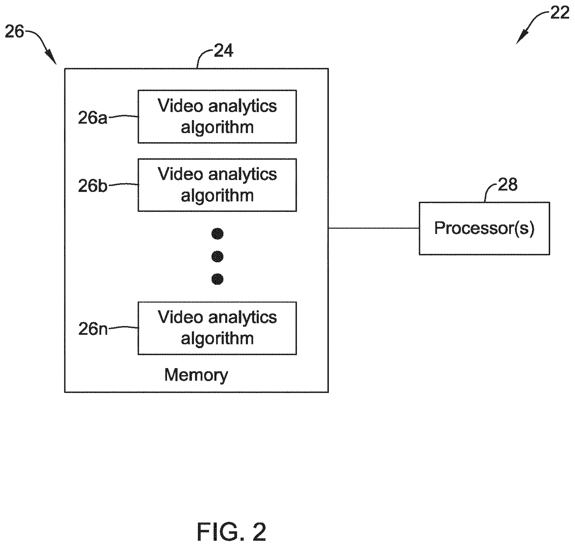

Figure 2 is a schematic block diagram of an illustrative system 23 for improving video analytics of a video stream captured by one of the video cameras 12. The illustrative system 23 may be considered as being an example of the controller 16. In some instances, the system 23 may be manifested within the controller 16. In some instances, the system 23 may be manifested within the edge gateway 18. In some instances, the system 23 may be manifested within the cloud-based server 20. In some cases, the system 23 may be distributed between two or more of the processor(s) 14 of the video cameras 12, the controller 16, the edge gateway 18 and/or the cloud-based server 20.

The illustrative system 23 includes a memory 24 that is configured to store a plurality of video analytics algorithms 26, individually labeled as 26a, 26b and through 26n. It should be noted that there is no correlation between the value of "n" in this case, referring to the number of video analytics algorithms 26, and the value of "n" in referring to the number of video cameras 12. In some cases, two or more of the video analytics algorithms 26 may be configured to identifying a common (e.g. the same) event type in a video stream. The system 23 includes one or more processors 28 that are operatively coupled to the memory 24.

The one or more processors 28 may be configured to identify one or more video parameters of the video stream. Based on the one or more identified video parameters of the video stream, the one or more processors 28 may be select one of the plurality of video analytics algorithms that is best suited to identify the common event type in the video stream. The one or more processors 28 may be configured to process the video stream using the selected one of the plurality of video analytics algorithms to identify the common event type in the video stream. As an example, the common event type may include one or more of a facial recognition event, a mask detection event, a person count event, a license plate detection event, a vehicle detection event, an unattended bag detection event, a shoplifting detection event, a crowd detection event, a person fall detection event, and a jaywalking detection event.

In some instances, the one or more processors 28 may be configured to, for each of the plurality of video analytics algorithms 26, store a set of desired video parameters for achieving a desired accuracy level for the respective video analytics algorithm 26. In some cases, the set of desired video parameters may include two or more of a desired minimum frame per second (FPS) parameter, a desired minimum frame resolution parameter, a desired minimum bit rate parameter, a desired video camera placement parameter, a desired video camera setting parameter, and a desired scene lighting parameter. The desired video camera placement parameter may include a camera mounting height parameter. The desired video camera setting parameter may include one or more of a camera focus parameter, a camera zoom parameter, a camera tilt parameter and a camera pan parameter.

The one or more processors 28 may be configured to compare one or more of the video parameters of the video stream with the corresponding ones of the desired video parameters of the set of desired video parameters for each of the plurality of video analytics algorithms. In some instances, the one or more processors 28 may be configured to identify which of the set of desired video parameters of the plurality of video analytics algorithms best match the one or more of the video parameters of the video stream, to identify the video analytics algorithm that is best suited to identify the common event type in the video stream.

In an example, the common event type may be a facial recognition event. There may be more than one facial recognition video analytics algorithm available for detecting facial recognition events. A first facial recognition video analytics algorithm may be more accurate under low lighting conditions than a second facial recognition video analytics algorithm. When one or more of the video parameters of the video stream indicate low lighting conditions, the first facial recognition video analytics algorithm, which is more accurate under low lighting conditions, may be selected for use. When one or more of the video parameters of the video stream indicate high lighting conditions, the second facial recognition video analytics algorithm, which may be more accurate under high lighting conditions, may be selected for use. In some cases, the first facial recognition video analytics algorithm may be automatically selected and used. In other cases, the first facial recognition video analytics algorithm may be recommended to an operator, and the operator may authorize the use of the first facial recognition video analytics algorithm.

In another example, the common event type may be a people count event. There may be more than one people count video analytics algorithm available for counting people in a FOV of the video camera. A first people count video analytics algorithm may be more accurate when the person density is less than a threshold, and a second people count video analytics algorithm may be more accurate when the person density is above the threshold. When one or more of the video parameters (person density) of the video stream indicate a person density below the threshold, the first people count video analytics algorithm may be selected for use. When one or more of the video parameters (person density) of the video stream indicate a person density above the threshold, the second people count video analytics algorithm may be selected for use.

In some cases, the system may monitor one or more of the video parameters of the video stream and dynamically select a video analytics algorithm that best matches the one or more of the video parameters of the video stream to achieve improved video analytic results (e.g. better accuracy). In some cases, the video frames of the video stream may be partitioned into a plurality of partitions. The system may monitor one or more of the video parameters of each partition of the video stream and dynamically select a video analytics algorithm for each partition that best matches the one or more of the video parameters of that partition to achieve improved video analytic results in that partition. In some cases, the partitions may be dynamically defined based on the one or more of the video parameters of the video stream. For example, the one or more of the video parameters may identify a region that has low lighting conditions and another region that a high lighting conditions. The system may dynamically define a first partition around the low lighting conditions and a second partition around the high lighting conditions. The system may then select a first video analytics algorithm for use in the first partition and a second different video analytics algorithm for use in the second partition.

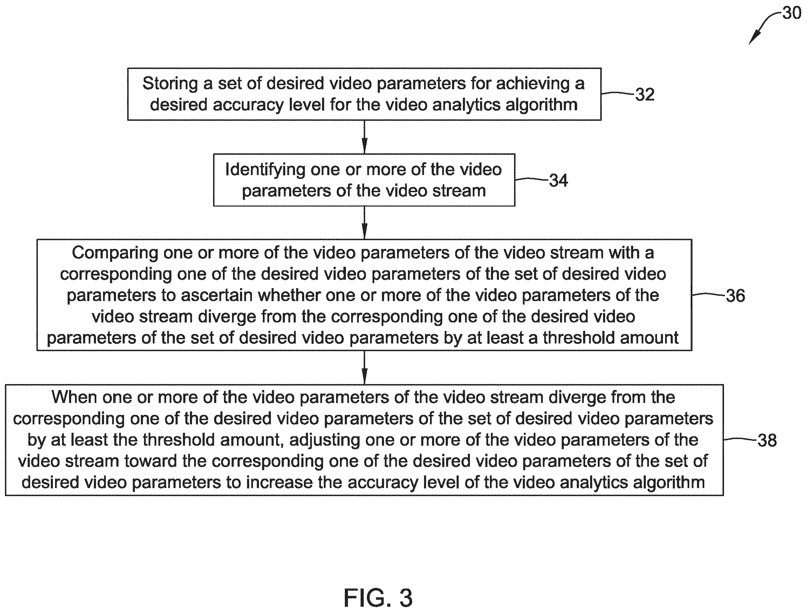

Figure 3 is a flow diagram showing an illustrative method 30 of improving performance of a video analytics algorithm (such as the video analytics algorithms 26). The video analytics algorithm is configured to receive and analyze a video stream captured by a video camera (such as the video cameras 12), wherein the video stream has one or more video parameters. The video analytics algorithm may include one of a facial recognition algorithm, a mask detection algorithm, a person count detection algorithm, a license plate detection algorithm, a vehicle detection algorithm, a unattended bag detection algorithm, a shoplifting detection algorithm, a crowd detection algorithm, a person fall detection algorithm, and a jaywalking detection algorithm. These are just examples.

The illustrative method 30 includes storing a set of desired video parameters for achieving a desired accuracy level for the video analytics algorithm, as identified at block 32. The set of desired video parameters may, for example, include two or more of a desired minimum frame per second (FPS) parameter, a desired minimum frame resolution parameter, a desired minimum bit rate parameter, a desired video camera placement parameter, a desired video camera setting parameter, and a desired scene lighting parameter. The desired video camera placement parameter may include a camera mounting height parameter. The desired video camera setting parameter may include one or more of a camera focus parameter, a camera zoom parameter, a camera tilt parameter and a camera pan parameter.

One or more of the video parameters of the video stream are identified, as indicated at block 34. One or more of the video parameters of the video stream are compared with a corresponding one of the desired video parameters of the set of desired video parameters to ascertain whether one or more of the video parameters of the video stream diverge from the corresponding one of the desired video parameters of the set of desired video parameters by at least a threshold amount, as indicated at block 36. When one or more of the video parameters of the video stream diverge from the corresponding one of the desired video parameters, the system (or an operator) may adjust one or more of the video parameters of the video stream (e.g. camera settings) toward the corresponding one of the desired video parameters to increase the accuracy level of the video analytics algorithm, as indicated at block 38.

For example, one of the desired video parameters for a video analytics algorithm may include a minimum FPS of 30 and a minimum bit rate of 10 Mbps. When one or more of the video parameters of the video stream diverge from these desired video parameters, the system (or an operator) may adjust the minimum FPS and/or the bit rate of the corresponding video stream (e.g. camera settings) to increase the accuracy level of the video analytics algorithm.

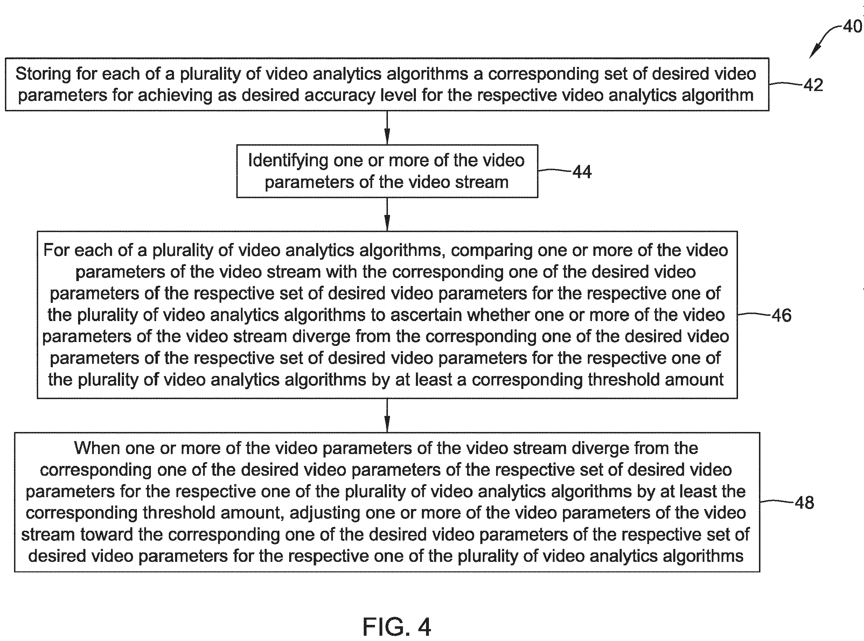

Figure 4 is a flow diagram showing an illustrative method 40 of improving performance of a video analytics algorithm (such as the video analytics algorithms 26). The video analytics algorithm is configured to receive and analyze a video stream captured by a video camera (such as the video cameras 12), wherein the video stream has one or more video parameters. The video analytics algorithm may include one of a facial recognition algorithm, a mask detection algorithm, a person count detection algorithm, a license plate detection algorithm, a vehicle detection algorithm, a unattended bag detection algorithm, a shoplifting detection algorithm, a crowd detection algorithm, a person fall detection algorithm, and a jaywalking detection algorithm. These are just examples.

The illustrative method 42 includes storing for each of a plurality of video analytics algorithms a corresponding set of desired video parameters for achieving a desired accuracy level for the respective video analytics algorithm, as identified at block 44. The set of desired video parameters may include, for example, two or more of a desired minimum frame per second (FPS) parameter, a desired minimum frame resolution parameter, a desired minimum bit rate parameter, a desired video camera placement parameter, a desired video camera setting parameter, and a desired scene lighting parameter. The desired video camera placement parameter may include a camera mounting height parameter. The desired video camera setting parameter may include one or more of a camera focus parameter, a camera zoom parameter, a camera tilt parameter and a camera pan parameter.

One or more of the video parameters of the video stream are identified, as indicated at block 44. For each of a plurality of video analytics algorithms, one or more of the video parameters of the video stream are compared with the corresponding one of the desired video parameters of the respective set of desired video parameters for the respective one of the plurality of video analytics algorithms to ascertain whether one or more of the video parameters of the video stream diverge from the corresponding one of the desired video parameters of the respective set of desired video parameters for the respective one of the plurality of video analytics algorithms by at least a corresponding threshold amount, as indicated at block 46. When one or more of the video parameters of the video stream diverge from the corresponding one of the desired video parameters of the respective set of desired video parameters for the respective one of the plurality of video analytics algorithms by at least the corresponding threshold amount, one or more of the video parameters of the video stream are adjusted toward the corresponding one of the desired video parameters of the respective set of desired video parameters for the respective one of the plurality of video analytics algorithms, as indicated at block 48.

In some instances, the method 40 may include adjusting one or more of the video parameters of the video stream to satisfy the desired accuracy level for each of two or more of the plurality of video analytics algorithms, if possible. In some cases, a first one of the two or more of the plurality of video analytics algorithms may have a higher priority than a second one of the two or more of the plurality of video analytics algorithms, and adjusting one or more of the video parameters of the video stream may include adjusting one or more of the video parameters of the video stream to achieve a higher accuracy level for the first one of the two or more of the plurality of video analytics algorithms (higher priority video analytics algorithm) relative to an accuracy level for the second one of the two or more of the plurality of video analytics algorithms (lower priority video analytics algorithm).

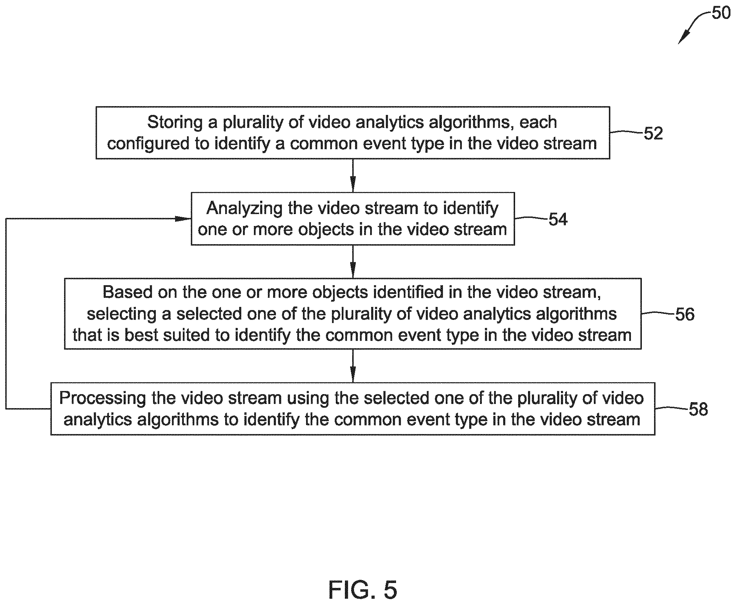

Figure 5 is a flow diagram showing an illustrative method 50 of improving video analytics of a video stream captured by a video camera (such as the video camera 12). The illustrative method 50 includes storing a plurality of video analytics algorithms, each configured to identify a common (e.g. same) event type in the video stream, as indicated at block 52. The video stream is analyzed to identify one or more objects in the video stream, as indicated at block 54. In some instances, the one or more objects may include one or more of an individual person captured in the video stream, a crowd of people captured in the video stream, an unattended bag captured in the video stream, a lighting related object captured in the video stream, a weather related object captured in the video stream, and a traffic related object captured in the video stream. In some cases, the one or more objects may be identified in one of more video frames of the video stream.

Based on the one or more objects identified in the video stream, a selected one of the plurality of video analytics algorithms that is best suited to identify the common event type in the video stream is selected, as indicated at block 56. The video stream is processed using the selected one of the plurality of video analytics algorithms to identify the common event type in the video stream, as indicated at block 58. In some cases, the method 50 may include processing the video stream and analyzing regions within the video stream that include people in order to determine whether a detection-based approach or a density-based approach is optimal for identifying the common event type. In some cases, steps 54, 56 and 58 may be repeatedly executed.

In one example, the common event type may be a people count event or a people crowd event. There may be more than one people count video analytics algorithm available for counting people in a FOV of the video camera. A first people count video analytics algorithm may be more accurate when the person density is less than a threshold, and a second people count video analytics algorithm may be more accurate when the person density is above the threshold. The video stream may be analyzed to identify persons (objects) in the video stream, as indicated at block 54. A person density may then be determined. When the person density below the threshold, a first people count video analytics algorithm may be selected for use. When the person density is above the threshold, a second people count video analytics algorithm may be selected for use.

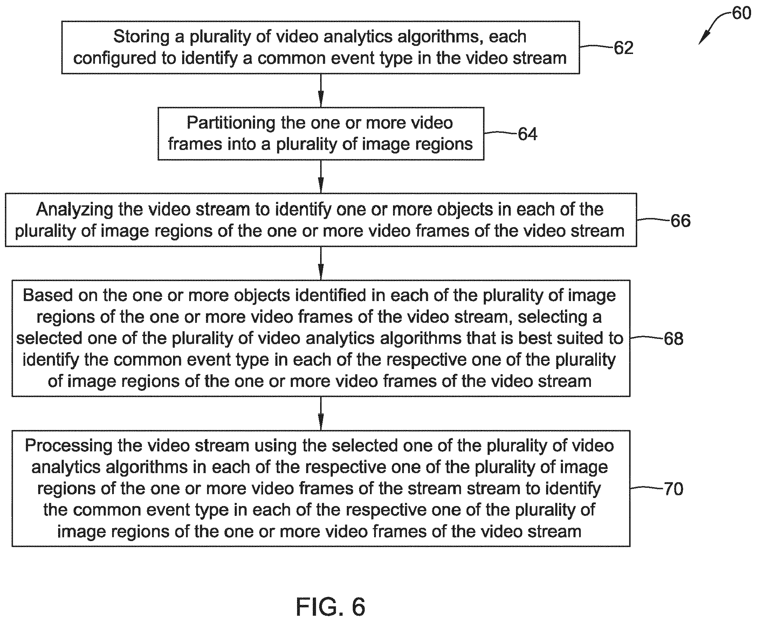

Figure 6 is a flow diagram showing an illustrative method 60 of improving video analytics of a video stream captured by a video camera (such as the video camera 12). The illustrative method 60 includes storing a plurality of video analytics algorithms, each configured to identify a common (e.g. same) event type in the video stream, as indicated at block 62. The one or more video frames are partitioned into a plurality of image regions, as indicated at block 64. The video stream is analyzed to identify one or more objects in each of the plurality of image regions of the one or more video frames of the video stream, as indicated at block 66.

Based on the one or more objects identified in each of the plurality of image regions of the one or more video frames of the video stream, a selected one of the plurality of video analytics algorithms that is best suited to identify the common event type in each of the respective one of the plurality of image regions of the one or more video frames of the video stream is selected, as indicated at block 68. The video stream is processed using the selected one of the plurality of video analytics algorithms in each of the respective one of the plurality of image regions of the one or more video frames of the video stream to identify the common event type in each of the respective one of the plurality of image regions of the one or more video frames of the video stream, as indicated at block 70. As an example, the common event type may include a people count event, wherein a first one of the plurality of video analytics algorithms may be selected when one or more individual persons are identified in the video stream, and a second one of the plurality of video analytics algorithms may be selected when a crowd of people is identified in the video stream.

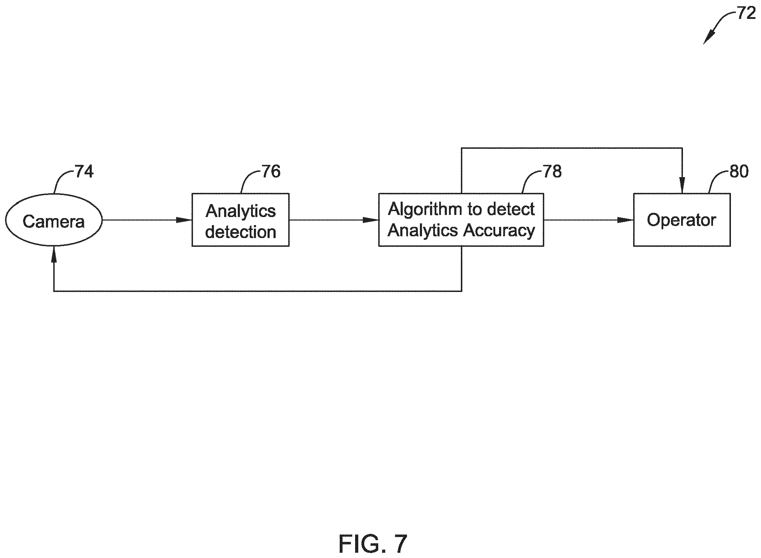

Figure 7 is a flow diagram showing an illustrative method 72 for auto-correcting video analytics algorithms. A camera 74 provides a video stream for analysis, as indicated at block 76. An algorithm is executed to detect the accuracy of the analytics, as indicated at block 78. As a result, and in some cases, one or more settings of the camera 74 may be automatically changed, such as but not limited to changing Infra-Red lighting based on lighting conditions or adjusting one or more parameters of a camera lens. This may include changing one or more of a pan setting, a tilt setting or a zoom setting, if the camera 74 is a PTZ camera. In some cases, an alert may be sent to an operator 80 for settings that cannot be automatically done, but rather need to be adjusted by the operator 80.

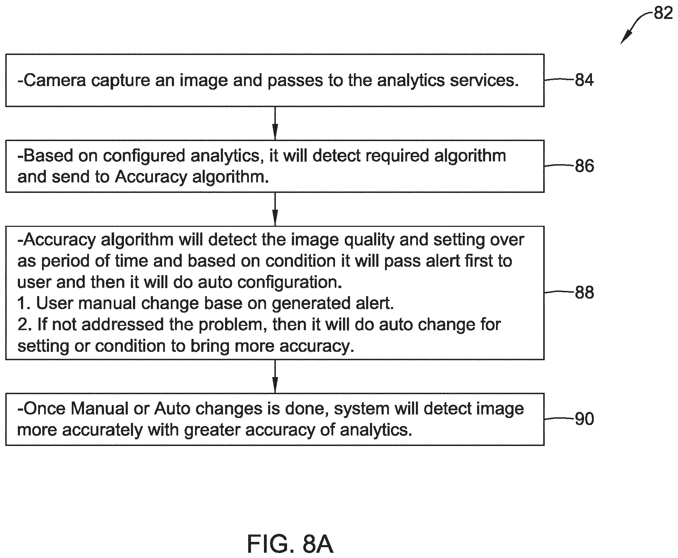

Figure 8A is a flow diagram showing an illustrative method 82 that may be considered as providing additional details for the method 72 of Figure 7. The illustrative method 82 includes a camera capturing an image and providing the image for analysis, as indicated at block 84. A required algorithm may be detected, and it will be sent to an accuracy algorithm, as indicated at block 86. The accuracy algorithm will detect image quality and settings over a period of time, and will alert the user and then automatically change one or more settings to bring more accuracy to the video analytics algorithm, as indicated at block 88. Once the changes have been implemented, the system will detect events more accurately, as indicated at block 90.

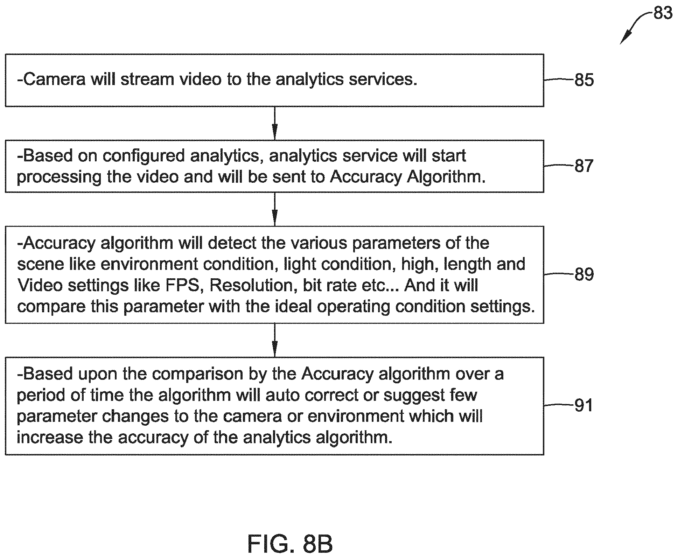

Figure 8B is a flow diagram showing an illustrative method 83 that may be considered as providing additional details for the method 72 of Figure 7. The illustrative method 83 includes a camera streaming video to analytics services, as indicated at block 85. The analytics services will start processing the video, as indicated at block 87. An accuracy algorithm will detect various parameters and will compare these to ideal parameter values, as indicated at block 89. Various parameter values may be automatically changed, or parameter changes may be suggested to a user, as indicated at block 91.

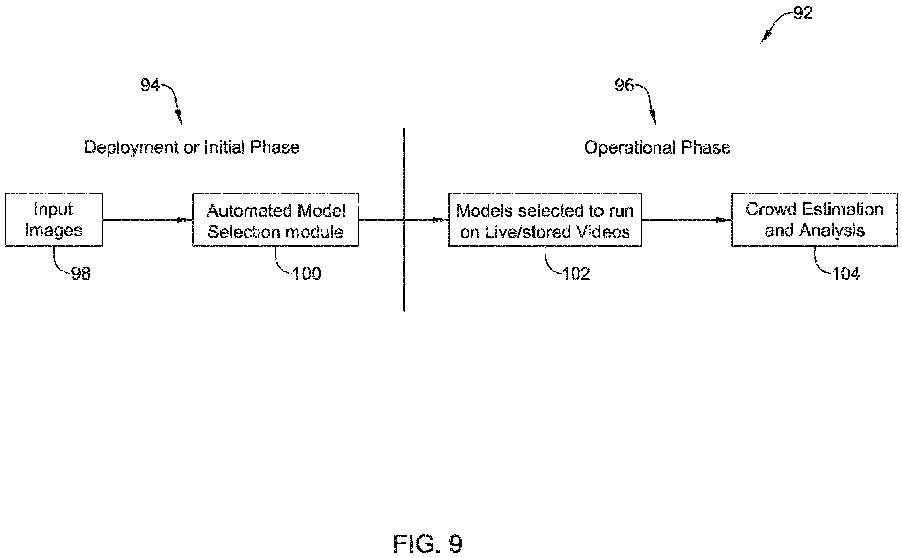

In one example, a variety of different video analytics algorithms may be used for detecting crowds and accurately estimating the number of people in a crowd. Some algorithms may be better suited to detecting and tracking smaller groups of people while other algorithms may be better suited to detecting and tracking larger groups of people. Some algorithms may be better suited to estimating crowd size for large crowds, for example. Figures 9 through 12 provide details regarding the selection of an appropriate crowd detection algorithm, based at least in part upon detected images.

Figure 9 is a flow diagram showing an illustrative method 92 that may be considered as being divided into a deployment phase 94 and an operational phase 96. During the deployment phase 94, input images are provided, as indicated at block 98. An automated model selection module is executed, as indicated at block 100. The automated model selection module is trained to identify conditions under which each of the crowd estimation video analytics algorithms are accurate. During the operational phase 96, conditions in the live or stored video may be identified, and the trained automated model selection module 100 may be used to select the crowd estimation video analytics algorithm to run on the live or stored videos, as indicated at block 102. This results in crowd estimation and analysis, as indicated at block 104.

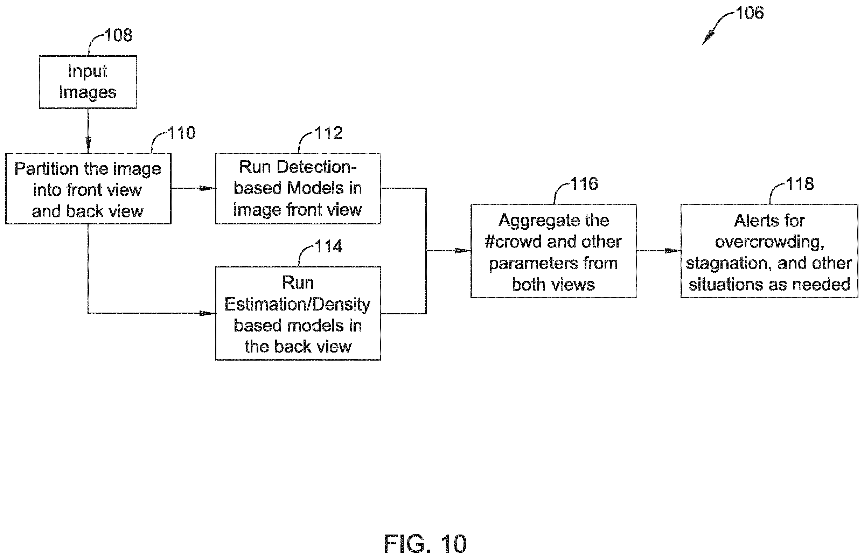

Figure 10 is a flow diagram showing an illustrative method 106 for manually selecting a model (e.g. selecting a video analytics algorithm). The illustrative method 106 starts with inputting images for analysis, as indicated at block 108. The images are partitioned into a from view portion and a back view portion, as indicated at block 110. In the front view portion, the people are closer to the camera and each person will be larger in size (more pixels) and can be more easily identified through object detection. In the back view portion, the people are further away from the camera and each person is smaller in size (less pixels) and can be difficult to individually identify via object detection. As such, in this example, an object detection-based model (e.g. object detection-based people count video analytics algorithm) can be run on the front view portion of the image, as indicated at block 112. An estimation and/or density-based model (e.g. estimation and/or density-based people count video analytics algorithm) can be run on the back view portion of the image, as indicated at block 114. The crowd parameters from both the front view portion and the back view portion are aggregated together, as indicated at block 116. Various alerts, if needed based on estimated crowd sizes and other criteria may be generated, as indicated at block 118.

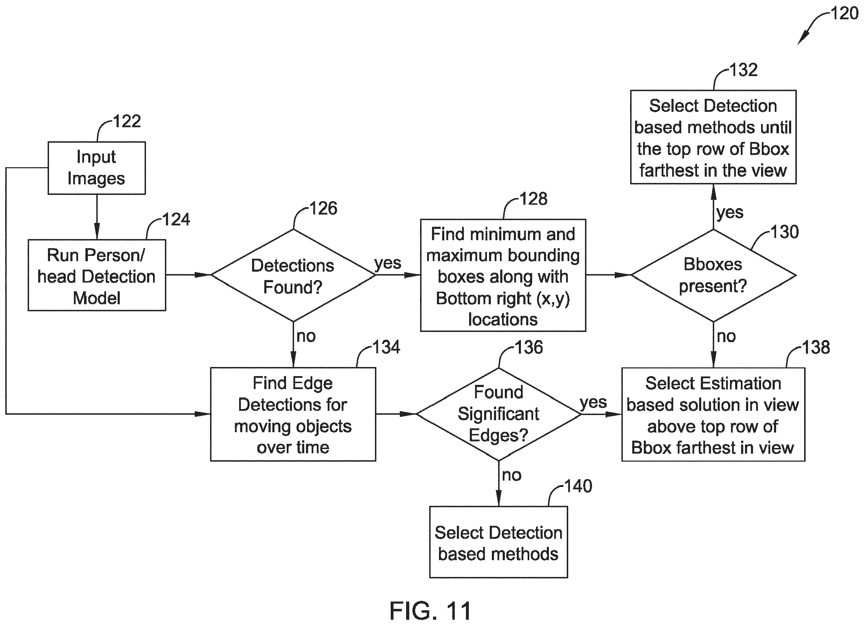

Figure 11 is a flow diagram shown an illustrative method 120 for automated model (e.g. video analytics algorithm) selection. The method 120 starts with inputting images for analysis, as indicated at block 122. Person and/or head detection models (e.g. video analytics algorithms) are run, as indicated at block 124. If detections are found, as indicated at decision block 126, control passes to block 128 and minimum and maximum bounding boxes are found, as well as the bottom right (x/y) locations for each bounding box, as indicated at block 128. If bounding boxes are found, as indicated at decision block 130, control passes to block 132. To virtually select the front view portion vs back view portion for model (e.g. video analytics algorithm) deployment, the top pixel row value of the farthest bounding box is considered as the horizontal demarcation to apply different models (e.g. video analytics algorithms) to the lower part and the upper part of that line. In one example, an object detection-based model (e.g. object detection-based people count video analytics algorithm) is run on the portion of the image frame that is above that line, and an estimation and/or density-based model (e.g. estimation and/or density-based people count video analytics algorithm) is run on the portion of the image frame that is below that line.

Returning to block 126, if no detections were detected, control passes to block 134, and edge detections of moving objects are found. If significant edges are found, as indicated at decision block 136, control passes to block 138 and an estimation and/or density-based model (e.g. estimation and/or density-based people count video analytics algorithm) is selected to run on the portion of the image frame that is above the line. If no significant edges are found at the decision block 136, control passes to block 140 and detection-based methods may be selected.

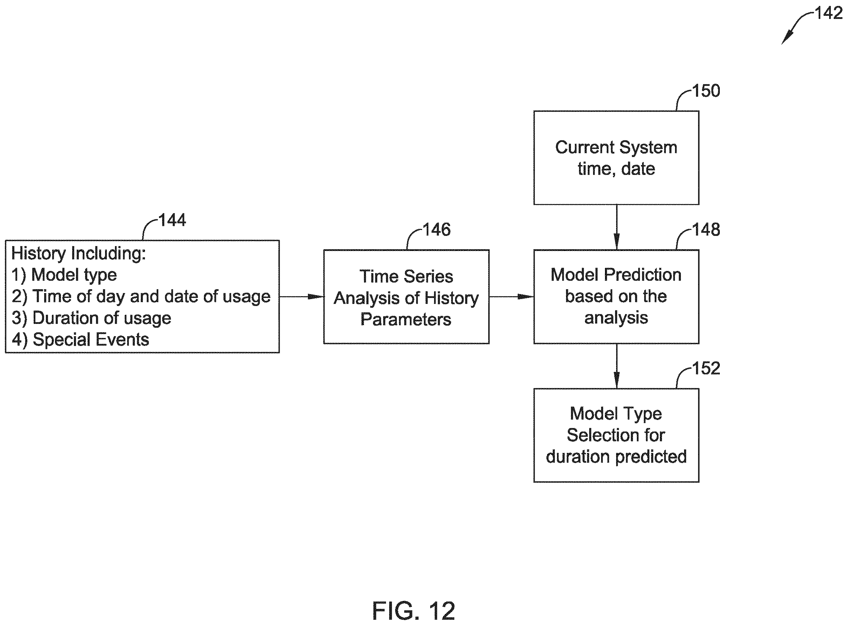

Figure 12 is a flow diagram showing an illustrative method 142 for automated model selection. The method 142 starts with history data, as indicated at block 144. A time series analysis of the history parameters is performed, as indicated at block 146. Model prediction is based on that analysis, as indicated at block 148. In some cases, current system date and time, as indicated at block 150, may play into the model prediction. The model type is selected for the predicted duration, as indicated at block 152.

In some cases, the system may recommend that additional video analytic algorithms may be useful based on what is detected within a particular image. For example, not all video analytic algorithms may be currently used, even though some unused video analytic algorithms would provide value to the user. The system may recommend an appropriate video analytics algorithm based on what is detected within a particular image. For example, if a particular camera is fixed or PTZ, and a single object is detected in its field of view, a recommendation system may be made to run one or more of a Window Break/Glass break detection algorithm, a Loitering and/or Motion detection algorithm, a Door Open Close analytics algorithm, and an Asset Protector Analytics algorithm. As another example, if multiple objects are detected in the field of view, a recommendation system may recommend running all of a Window Break/Glass break detection algorithm, a Loitering and Motion detection algorithm, a Door Open Close analytics algorithm and an Asset protector analytics algorithm. It will be appreciated that each partial view or zone within an image frame may have its own recommendation.

The object detection and the recommendation system may run on an edge camera, for example, a NVR (network video recorder), and/or a VMS (video management system). The object detection and the recommendation system may run in a cloud-based server, for example. In some cases, the output of the recommendation system may be used to enable existing video analytics algorithms that are currently available for use, or to prompt the user to get a licensed to the recommended video analytics algorithms. In some cases, the recommended video analytics algorithms may be purchased from allowed marketplaces. This can be extended to fire domain with electrical distribution system object detected to enable fire detection logic in the view of a camera. In some cases, this may be extended to places/location analytics such as when a retail environment is detected, the recommendation system may recommend running Retail analytics algorithms such as Loitering and Shoplifting analytic algorithms.

For example, in some cases, if a detected object in the image is an electrical distribution point (e.g. fuse box), the system may recommend running a fire detection algorithm to detect fires that might originate in the fuse box. If the detected object is a locker, safe or vault, the system may recommend running an asset protection algorithm. If a detected object is a commercial mall, the system may recommend running a retail analytics algorithm such as but not limited to people heatmap algorithms, consumer interest/intelligence algorithms, mask detection algorithms, social distance algorithms, crowd detection algorithms, shelf replenishment algorithms, checkout free stores algorithms and/or dwell analytics algorithms. If the detected object is an ATM machine, the system may recommend running one or more asset protection algorithms.

If the detected object is a door, the system may recommend running an entry detection algorithm, an exit detection algorithm, a motion detection algorithm or a face detection algorithm. If the detected object is a lift (elevator), the system may recommend running an entry detection algorithm, an exit detection algorithm, a motion detection algorithm or a face detection algorithm. If the detected object is a parking area, the system may recommend running a license plate recognition algorithm, an empty parking spot detection algorithm, collision detection algorithm or a stopped vehicle detection algorithm. If the detected object is a window, the system may recommend running a perimeter motion detection algorithm.

If the detected object is an airport, the system may recommend running one or more of a loitering detection algorithm, a face detection algorithm, an unattended baggage algorithm or a baggage algorithm. If the detected object is a road and traffic lights, the system may recommend running any of a suite of traffic violation detection algorithms. If the detected object is an industrial site or a construction site, the system may recommend running a PPE (personal protective equipment) detection algorithm or a hard hat detection algorithm.

If the detected object is a POS (point of sale) terminal, a cash counter or a ticketing window, the system may recommend running a queue management algorithm. If the detected object is a fence, the system may recommend running a trespassing detection algorithm. If the detected object is a swimming pool, the system may recommend running a floating face down detection algorithm. These are just examples.

In some cases, a particular video analytics algorithm, or a group of video analytics algorithms, may have a set of desired conditions. As an example, face mask detection algorithms may have a set of desired conditions. Some of these desired conditions include the face size being adequately large to obtain features, such as at least 50 × 50 pixels. Face pose and skew can be a challenge for accuracy. Adequate lighting on the face may not always be possible, and camera placement can be important. Side poses can be problematic, as can blurring of face images.

As an example, a camera should be 8 to 10 feet above the ground, and its mounting should be adequate to provide frontal face images, with a horizontal FOV (field of view) of not more than 60 degrees. Ceiling mounted or overhead cameras which have a near vertical view of faces is not recommended. Bright light, including sunlight, in the background that results in poor image quality is not recommended. Using a wide-angle camera with a long FOV is not recommended.

With respect to image quality, a minimum of full HD (2 megapixel) video streams are recommended, with a high bit rate (5 to 8 Mbps for 30 fps) with no blur and good focus. For a 3MP camera, the recommended bit rate of 10 to 15 Mbps is recommended. With respect to illumination, 100 to 150 lux, with uniform illumination on both sides of the face is recommended. With respect to face pose, a front pose plus or minus 45 degrees is recommended. With respect to detection distances, a maximum horizontal distance of 15 feet is recommended. A static background is optimal.

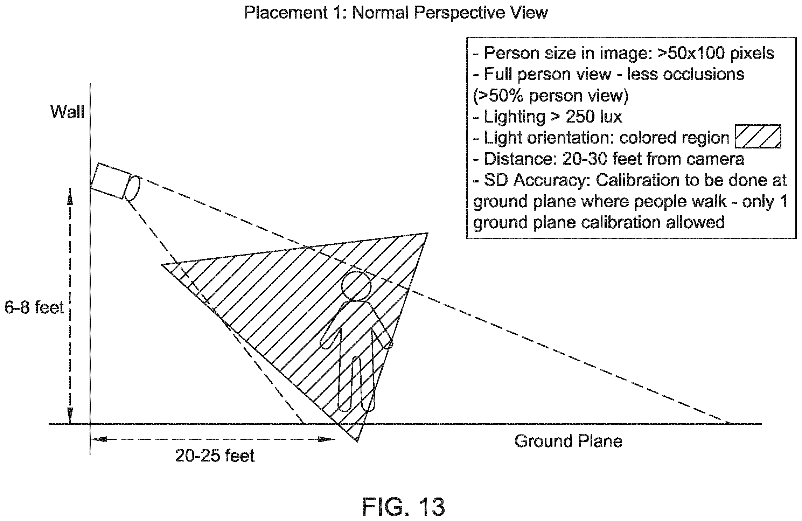

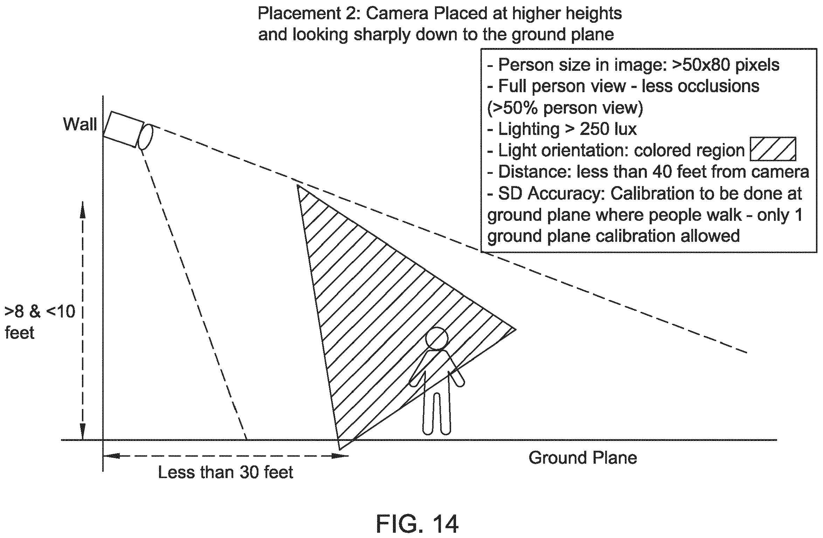

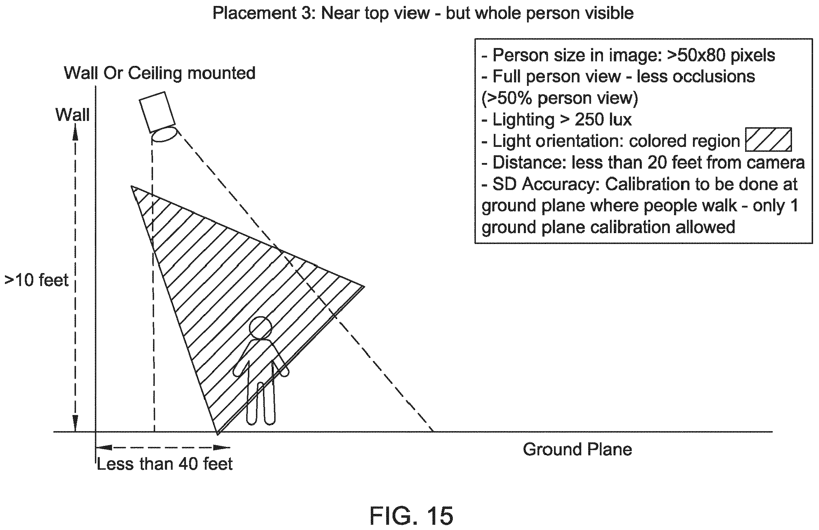

As noted, relative camera placement can be important. Figures 13 through 15 are schematic illustrations of relative camera placement. In Figure 13, it can be seen that person recognition can be good till around 30 feet, when the camera placement is < 8 feet (given that average height of person is between 5-6 feet), and when the person is at approximately 20-30 feet from the camera. Also, lighting should be > 250 lux and the light should be falling on the person with no backlighting for better accuracies. Figure 14 shows the camera placement at a higher location, looking sharply downward. This can reduce the distance at which accurate detection can be achieved. Figure 15 shows a high mounted camera, but the whole person is visible.

Calibration can be important. In some instances, calibration may occur relative to a ground plane. The ground plane may be flat or angled, for example. The ground plane may represent a floor, a road surface, a dirt surface, a grass field, or the like. In some cases, a field of view may have multiple planes, such as a flat surface defining a ground plane, and a staircase defining a second plane at an angle relative to the ground plane. In such cases, it may be useful to calibrate relative only to the ground plane, not the second (or third, or fourth) planes that extend at an angle relative to the ground plane.

In some cases, the system may provide a recommendation to adjust the camera placement and/or other conditions to adjust one or more of the video parameters of the video stream captured by the camera. In some cases, the recommendations recommend an adjustment to the camera placement, one or more camera settings, lighting and/or other conditions to change one or more of the video parameters of the video stream captured by the camera toward the desired video parameters of a video analytics algorithm to increase the accuracy level of the video analytics algorithm (e.g. a facial recognition video analytics algorithm).

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

## Claims

1. A method of improving performance of a video analytics algorithm, the video analytics algorithm configured to receive and analyze a video stream captured by a video camera, the video stream having one or more video parameters, the method comprising:
storing a set of desired video parameters for achieving a desired accuracy level for the video analytics algorithm;
identifying one or more of the video parameters of the video stream;
comparing one or more of the video parameters of the video stream with a corresponding one of the desired video parameters of the set of desired video parameters to ascertain whether one or more of the video parameters of the video stream diverge from the corresponding one of the desired video parameters of the set of desired video parameters by at least a threshold amount; and
when one or more of the video parameters of the video stream diverge from the corresponding one of the desired video parameters of the set of desired video parameters by at least the threshold amount, adjusting one or more of the video parameters of the video stream toward the corresponding one of the desired video parameters of the set of desired video parameters to increase the accuracy level of the video analytics algorithm.

2. The method of claim 1, wherein the set of desired video parameters comprises two or more of:
a desired minimum frame per second (FPS) parameter;
a desired minimum frame resolution parameter;
a desired minimum bit rate parameter;
a desired video camera placement parameter;
a desired video camera setting parameter; and
a desired scene lighting parameter.

3. The method of claim 2, wherein the desired video camera placement parameter comprises a camera mounting height parameter.

4. The method of claim 2, wherein the desired video camera setting parameter comprises one or more of a camera focus parameter, a camera zoom parameter, a camera tilt parameter and a camera pan parameter.

5. The method of claim 1, wherein the video analytics algorithm comprises one of a facial recognition algorithm, a mask detection algorithm, a person count detection algorithm, a license plate detection algorithm, a vehicle detection algorithm, a unattended bag detection algorithm, a shoplifting detection algorithm, a crowd detection algorithm, a person fall detection algorithm, and a jaywalking detection algorithm.

6. The method of claim 5, comprising:
storing for each of a plurality of video analytics algorithms a corresponding set of desired video parameters for achieving a desired accuracy level for the respective video analytics algorithm;
for each of a plurality of video analytics algorithms, comparing one or more of the video parameters of the video stream with the corresponding one of the desired video parameters of the respective set of desired video parameters for the respective one of the plurality of video analytics algorithms to ascertain whether one or more of the video parameters of the video stream diverge from the corresponding one of the desired video parameters of the respective set of desired video parameters for the respective one of the plurality of video analytics algorithms by at least a corresponding threshold amount; and
when one or more of the video parameters of the video stream diverge from the corresponding one of the desired video parameters of the respective set of desired video parameters for the respective one of the plurality of video analytics algorithms by at least the corresponding threshold amount, adjusting one or more of the video parameters of the video stream toward the corresponding one of the desired video parameters of the respective set of desired video parameters for the respective one of the plurality of video analytics algorithms.

7. The method of claim 6, comprising:
adjusting one or more of the video parameters of the video stream to satisfy the desired accuracy level for each of two or more of the plurality of video analytics algorithms.

8. The method of claim 7, wherein a first one of the two or more of the plurality of video analytics algorithms has a higher priority than a second one of the two or more of the plurality of video analytics algorithms, and adjusting one or more of the video parameters of the video stream comprises adjusting one or more of the video parameters of the video stream to achieve a higher accuracy level for the first one of the two or more of the plurality of video analytics algorithms relative to an accuracy level for the second one of the two or more of the plurality of video analytics algorithms.

9. A system for improving video analytics of a video stream captured by a video camera, the system comprising:
a memory for storing a plurality of video analytics algorithms, each configured to identify a common event type in the video stream;
one or more processors operatively coupled to the memory, the one or more processors configured to:
identify one or more video parameters of the video stream;
based on the one or more identified video parameters of the video stream, select a selected one of the plurality of video analytics algorithms that is best suited to identify the common event type in the video stream; and
process the video stream using the selected one of the plurality of video analytics algorithms to identify the common event type in the video stream.

10. The system of claim 9, wherein the one or more processors are configured to:
for each of the plurality of video analytics algorithms, store a set of desired video parameters for achieving a desired accuracy level for the respective video analytics algorithm;
compare one or more of the video parameters of the video stream with the corresponding ones of the desired video parameters of the set of desired video parameters for each of the plurality of video analytics algorithms; and
identify which of the set of desired video parameters of the plurality of video analytics algorithms best matches the one or more of the video parameters of the video stream, which corresponds to the one of the plurality of video analytics algorithms that is best suited to identify the common event type in the video stream.

11. The system of claim 10, wherein the set of desired video parameters comprises two or more of:
a desired minimum frame per second (FPS) parameter;
a desired minimum frame resolution parameter;
a desired minimum bit rate parameter;
a desired video camera placement parameter;
a desired video camera setting parameter; and
a desired scene lighting parameter.

12. The system of claim 11, wherein the desired video camera placement parameter comprises a camera mounting height parameter.

13. The system of claim 11, wherein the desired video camera setting parameter comprises one or more of a camera focus parameter, a camera zoom parameter, a camera tilt parameter and a camera pan parameter.

14. The system of claim 9, wherein the common event type comprises one of a facial recognition event, a mask detection event, a person count event, a license plate detection event, a vehicle detection event, an unattended bag detection event, a shoplifting detection event, a crowd detection event, a person fall detection event, and a jaywalking detection event.

15. The system of claim 9, wherein the plurality of video analytics algorithms comprises one or more of a facial recognition algorithm, a mask detection algorithm, a person count detection algorithm, a license plate detection algorithm, a vehicle detection algorithm, a unattended bag detection algorithm, a shoplifting detection algorithm, a crowd detection algorithm, a person fall detection algorithm, and a jaywalking detection algorithm.
